**Europäisches Patentamt**

**European Patent Office**

**Office européen des brevets**

(19)

(11) Publication number: **0 127 932**
**A1**

(12) # EUROPEAN PATENT APPLICATION

(21) Application number: **84302284.9**

(22) Date of filing: **03.04.84**

(51) Int. Cl.³: **F 16 D 65/12**

(30) Priority: **07.04.83 US 483020**

(43) Date of publication of application:
**12.12.84 Bulletin 84/50**

(84) Designated Contracting States:
**DE FR GB IT SE**

(71) Applicant: **EATON CORPORATION**
**100 Erieview Plaza**
**Cleveland Ohio 44114(US)**

(72) Inventor: **Kleinhagen, Charles William**
**240 Borden Drive**
**Battle Creek Michigan 49017(US)**

(72) Inventor: **Boyle, Brian Lewis**
**22690 Dover Hill Apt. 104**
**Farmington Hills Michigan 48024(US)**

(74) Representative: **Douglas, John Andrew**
**Eaton House Staines Road**
**Hounslow Middlesex TW4 5DX(GB)**

(54) **Brake disc mounting.**

(57) An improved mounting structure (10) for mounting a brake disc (12) to a hub member (14) for rotation therewith and a degree of axial (22) and radial (24) freedom relative thereto is provided. The hub is provided with an array of internally threaded bores (26) and the disc (12) is provided with a radially inwardly extending flange (30) having a plurality of radially elongated slots (32) alignable with said internally threaded bores. Threaded fastener members, such as studs (46) are threadably received within the internally threaded bores (26) and extend through the radially elongated slots (32) and include a rotatable bearing member (50) on the other end thereof. A generally tubular spacer (38) having an axial length (40) greater than the axial thickness (42) of the disc flange (30) surrounds the shanks of the externally threaded stud (46). One end of the spacer bears against the hub member and the other end (54) of the spacer is engagable by the rotatable bearing member bears directly or indirectly solely against the spacer. A resilient thrust washer such as a Belleville washer (52) may be interposed the rotatable bearing member (50) and the flange (30) to provide a resilient axial force tending to urge the disc (12) axially toward the hub (14).

Fig.2

-1-
## BRAKE DISC MOUNTING

## BACKGROUND OF THE INVENTION

### Field of the Invention

The present invention relates to a mounting structure for mounting a disc brake disc to a hub for rotation with the hub and in particular to a mounting structure for mounting a disc brake disc or rotor to a hub for rotation therewith and a degree of radial and/or axial movement relative thereto.

### Description of the Prior Art

As is known, a vehicle disc brake assembly typically comprises a disc, also called a rotor, fixed for rotation with a wheel assembly and/or an axle shaft and defining a pair of generally flat parallel surfaces, and a caliper assembly rigidly and/or slidably mounted to the vehicle and carrying a pair of friction pads or shoes selectively clampingly engagable with the disc flat surfaces to retard rotation of the wheel assembly. Devices of this type are well known in the prior art as may be seen by reference to United States Patents Nos. 4,235,312 and 4,351,419 the disclosures of which are hereby incorporated by reference.

When the disc brake pads are clamped against the disc, the kinetic energy of the vehicle is frictionally converted into heat energy, and a great deal of heat is generated. In heavy duty vehicles, such as trucks, to provide greater cooling of the rotor or disc, the disc is often but not necessarily ventilated. However, the heating and cooling of the rotor or disc is often uneven, which if not compensated for, may result

-2-

in disc cracking and/or failure. For example, the working area of the disc (i.e. the area between the friction pads) is heated and/or cooled at a different rate than is the attachment (i.e. flange) area of the disc, and thus the two areas will expand and/or contract at different rates. This problem is discussed in greater detail in United States Patent No. 3,982,297, the disclosure of which is hereby incorporated by reference.

Further, as the disc will be heated and cooled at a different rate than the hub of the wheel assembly or axle shaft, the disc will be subject to a thermal radial and/or axial expansion and contraction relative to the hub. Accordingly, the structure by which the disc is attached to the hub must allow for radial and axial movement of the disc relative to the hub or the disc will be subject to undue stress and wear which will tend to result in cracking or other structural failure of the disc.

To accommodate relative radial and/or axial expansion and contraction of the disc relative to the hub, flexible connections have been proposed as may be seen by reference to United States Patents Nos. 4,273,218; 4002,277; 3,978,945 and 3,754,624, the disclosures of which are hereby incorporated by reference. While these prior art proposals did allow for relative movement between the hub and disc, the tended to be relatively complicated and/or expensive and not well suited for high volume heavy duty usage.

A structure for mounting a disc or rotor to a hub in a manner allowing relative radial movement therebetween utilizing bolts received in radially elongated holes may be seen by reference to United States Patent No. 4,102,443, the disclosure of which is hereby incorporated by reference. This proposed mounting structure is not totally satisfactory as a relatively high precision mounting ring is required and as the clamping force and the locking tension of the mounting bolts is applied directly or indirectly to the disc which may create forces tending to result in failure of the disc.

## SUMMARY OF THE INVENTION

In accordance with the present invention, the drawbacks of the prior art have been minimized or overcome by the provision of a relatively simple and reliable mounting structure for mounting a disc brake disc to a rotatable member such as a hub for rotational movement therewith and a degree of radial and/or axial movement relative thereto which structure utilizes standard bolts, or studs and nuts, which do not exert a direct clamping force nor a locking tension on the disc.

The above is accomplished by providing a hub on, or rotationally fixed to, the wheel assembly or the axle shaft having an annular array, or bolt circle, of internally threaded bores for receiving the threaded shanks of bolts or studs. The disc is provided with a mounting flange having a similar array of radially elongated holes or slots therethrough. A spacer, such as a generally tubular spacer is received in each slot.

The spacers have an axial length greater than the thickness of the disc flange, an outer diameter designed to tightly engage the radialy extending sidewalls of the slots and an inner diameter equal to or slightly greater than the major diameter of the mounting bolts or studs. A thrust washer, such as a Belleville washer, may be provided to be interposed between the outer surface of the flange and the inner bearing surface of the bolt head or nut.

The bolt head or nut is tightened down to bear against the spacer or to rigidly clamp the inner diameter of the thrust washer against the spacer causing the washer to bear against the flange with a predetermined force, determined by geometry of the washer and the relative length of the spacer and thickness of the flange. All tightening force of the bolt or nut and the tension in the bolt or stud shaft is applied to the spacer and hub. Further, if utilized, the resilient nature of the thrust washer or other resilient biasing means will permit axial thermal expansion of the disc without subjecting the disc and/or bolt or stud shank to undue stress. The thrust washer is of a relatively light spring constant as the need to restrain axial movement of the rotor or disc is small and only a light resilient axial bias is required to prevent rattle.

Accordingly, it is an object of the present invention to provide a new and improved relatively simple and reliable mounting structure for mounting a disc brake disc to a hub for rotational movement therewith and a degree of axial and/or radial movement relative thereto while minimizing the manufacturing precision and cost that prior efforts required to maintain alignment and eliminate rotational movement between disc and hub.

-5-

This and other objects and advantages of the present invention will become apparent from a reading of the discription of the preferred embodiment taken in connection with the drawings.

BRIEF DESCRIPTION OF THE DRAWINGS

FIGURE 1 is a partial side view, partially in section, of the disc mounting structure of the present invention.

FIGURE 2 is a partial front view, with one of the nuts and thrust washers removed for clarity, of the structure of FIGURE 1.

FIGURE 3 is a partial side view, partially in section, of an alternate embodiment of the present invention.

FIGURE 4 is a front view of the spacer of FIGURE 3.

FIGURE 5 is a partial front view of a further alternate embodiment of the present invention.

DESCRIPTION OF THE PREFERRED EMBODIMENT

In the following description of the preferred embodiment, certain terms will be utilized for purposes of description and reference only and are not intended to be limiting. The terms "upwardly," "downwardly," "rightwardly" and "leftwardly" refer to directions in the drawings to which reference is made. The terms "inwardly" and "outwardly" refer to directions, toward and away from, respectively, the geometric center of the device being described. The above applies to terms specifically mentioned, derivatives thereof and terms of similar import. The term "brake" as used herein shall designate frictional devices such as brakes and/or clutches and the like.

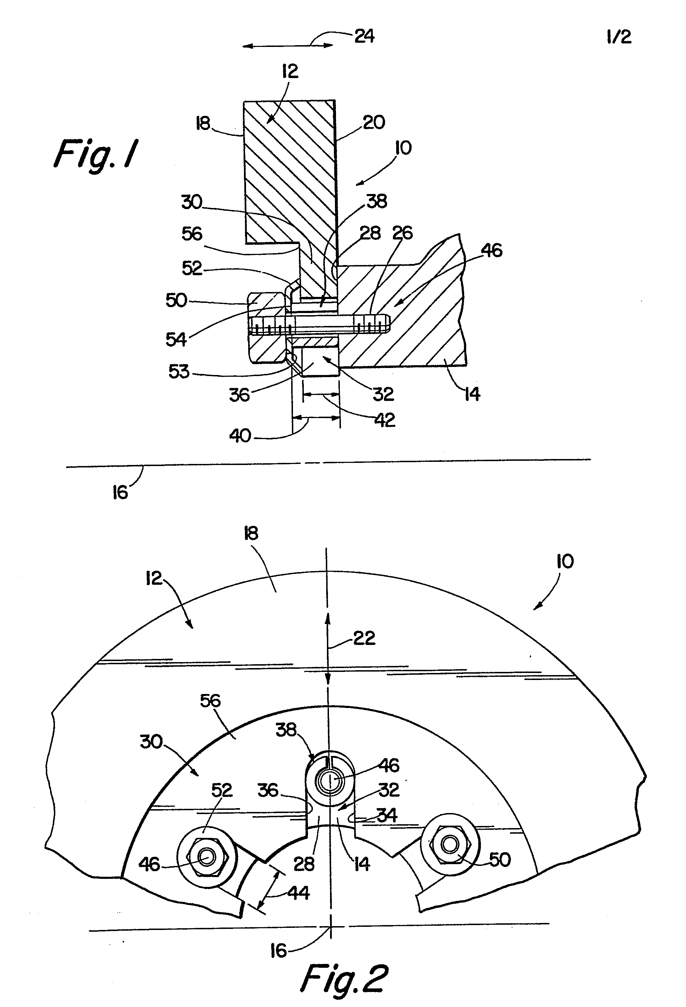

The mounting structure 10 of the present invention, as may be seen by reference to FIGURES 1 and 2, is utilized to mount a generally annular disc brake disc or rotor 12 to a hub 14 for rotation therewith about a common axis of rotation 16. As is known, hub 14 is fixed to a wheel assembly (not shown) or an axle shaft (not shown) for rotation therewith. The disc or rotor 12 is provided with a pair of generally parallel flat surfaces 18 and 20 designed to be selectively frictionally engaged by (i.e. clamped between) a pair of disc brake discs or pads, such as disc brakes pads of a caliper assembly (not shown).

To retard rotational motion of the wheel assembly or axle shaft to which the hub 14 is attached, the unshown disc brakes pads are clamped against the disc surfaces 18 and 20. When the brake pads are clamped against the disc surfaces 18 and 20, the kinetic energy of the rotating member to which hub 14 is attached is converted into heat energy at the clamped friction surfaces which greatly increases the temperature of the disc 12. As the temperature of disc 12 increases, the disc expands radially, i.e. in the direction of arrow 22, and/or axially, i.e. in the direction of arrow 24. As the temperature of the disc decreases, i.e. as the disc cools, the disc will contract radially and axially. As the disc will increase in temperature and cool in temperature at a rate different from the heating and cooling of the hub 14, the disc will expand and contract both radially and axially relative to hub 14. Accordingly, to prevent undue stress on the disc 12 the mounting structure 10 must accommodate the differential thermal expansion and contraction of the disc 12 relative to the hub 14.

Hub 14 is provided with a plurality, here shown as six, of internally threaded bores 26 opening to its generally flat leftwardly facing surface 28, which bores 26 define an annular array, or bolt circle, for receipt of externally threaded members. The disc 12 is provided with a radially inwardly located mounting flange 30 having a plurality of radially extending slots 32 therethrough which slots are of equal number and of equal circumferential spacing as the internally threaded bores 26. The slots 32 are defined by radially extending side walls 34 and 36 and may be opened at the radially inner ends thereof.

A generally tubular split spacer 38 of an axial length 40 exceeding the axial thickness 42 of the flange portion 30 of disc 12 is received within each radially extending slot 32. Spacers 38 are of a relaxed outer diameter slightly greater than the circumferential thickness 44 of the radially extending slots 32 and are of an inner diameter slightly greater than the outer diameter of studs 46 which pass therethrough and are threadably received in the internaly threaded bores 26.

A nut 50 is threadably received on the outer (lefthand in FIGURE 1 ) end of stud 26 and a thrust washer such as Belleville washer 52 is interposed between the axially inward (rightwardly) bearing surface 53 of nut 50 and the axially outward (leftward in FIGURE 1) end 54 of spacer 38. The Belleville washer 52 bears against the axially outward (leftward in FIGURE 1) surface 56 of flange 30 of disc or rotor 12 to urge the rotor 12 rightwardly against the hub 14 with a relatively light axial force to prevent rattle therebetween.

The washer 52 is selected with careful consideration to the axial difference between axial length 40 of spacer 38 and the axial thickness 42 of flange 30 so that upon solid compression of the inner portion of washer 52 between surface 53 of nut 50 and end 54 of spacer 38 only a relatively light rightward axial resilient bias is applied to disc 12. Accordingly, all, or substantially all, of the teghtening and/or locking tension in stud 46 is applied solely to the spacer 38 and hub 14 and the disc 12 is effectively isolated therefrom.

Other resilient biasing means, such as coil springs or the like, may be substituted for washers 52 as is known in the art.

Spacers 38 are of a sufficiental cross sectional area to handle the axial load of the disc attaching fastener, nut 50, and function as a shoulder to prevent said tightening axial load from bearing on the disc 12. Accordingly, all tightening axial forces developed by tightening nut 50 on stud 26 are absorbed by spacer 38 and transmitted directly to hub 14 and only that light axial load applied by Belleville washer 52 is applied to the disc 12. This prevents undue stresses from being applied by the fastening means to the disc 12. Although a stud 26 and a nut 50 are illustrated in the preferred embodiment, it is understood that a headed bolt or the like could be substituted therefor.

As the relaxed outer diameter of the spacers 38 is slightly greater than the circumferential width 44 of the radially extending slots 32, the spacers are resiliently received within the slots in an interference fit to prevent circumferential clearance therebetween. Accordingly, as may be seen, the rotor or disc 12 is circumferentially fixed to the hub 14 but is not restrained from a degree of relative axial and/or radial expansion relative thereto as the spacers do not radially interfere with the slots 32 and as the Belleville washers 52 will permit a degree of axial expansion of the flange 30. Preferably, as may be seen by reference to FIGURE 2, the slots will be configured such that in the most cooled, i.e. the most radially contracted position of disc 12, the spacers 38 will engage or almost engage the most radially outer ends of the slots to assist in proper centering of the disc 12 about the axis of rotation 16 thereof.

It is an important feature of the invention that the tightening force of the disc mounting fasteners, such as nuts 50, which may be considerable, and the axial strain caused thereby be isolated from the disc 12 to prevent undue stresses therefrom applied to the disc 12.

Of course, the spacers 38 may be of a non-split construction and/or may be provided with diametrically opposed outer flat surfaces to provide a surface contact with the side walls 34 and 36 of the axially extending slots 32.

Accordingly, it may be seen that a new and improved mounting structure 10 for mounting a disc 12 to a hub member 14 for rotation therewith while allowing a degree of radial and axial freedom of the disc 12 relative to the hub to account for differential expansion and contraction due to differential heating of the disc relative to the hub has been provided. The

0127932

structure 10 utilizes sleeve or spacer members 38 against which will bear the fastener members such as a bolt head or a nut 50 to isolate the tension in the fastener members from the disc 12 to prevent the application of undue stresses thereon thereby minimizing any tendency of the rotor to crack or otherwise fail as a result of the mounting thereof to the hub 14.

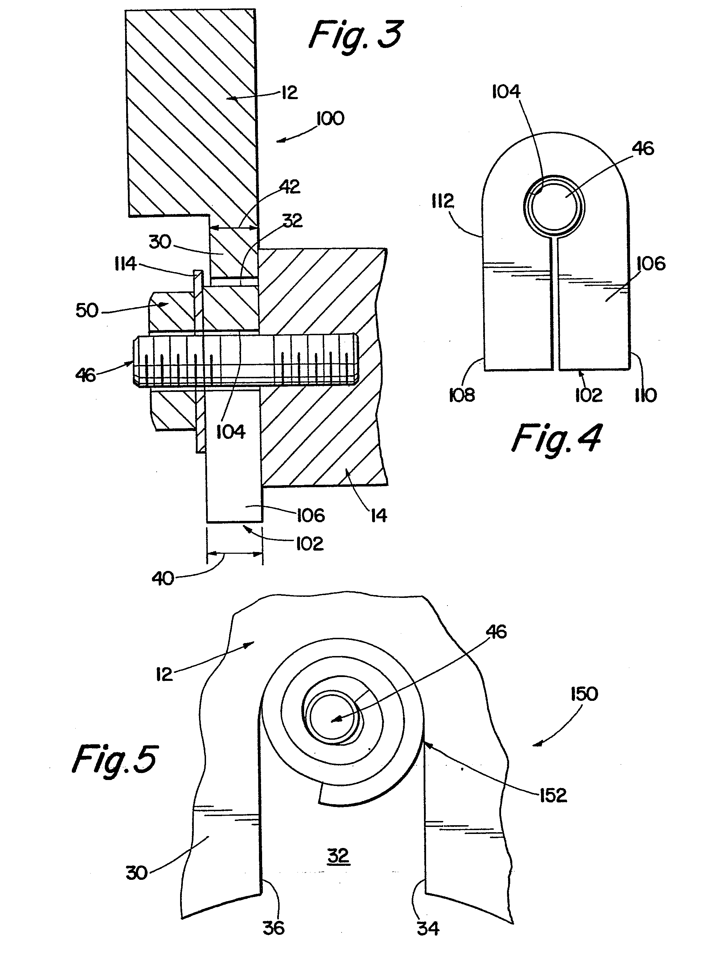

An alternate embodiment 100 of the mounting structure of the present invention may be seen by reference to FIGURES 3 and 4. Members of mounting structure 100 which are structurally and functionally identical, or substantially identical, to members of mounting structure 10 described above will be assigned like reference numerals.

Briefly, mounting structure 100 includes a disc brake disc or rotor 12 provided with a plurality of radially extending slots 32 which is mounted to a hub 14 for rotational movement therewith and a degree of radial and/or axial freedom relative thereto by studs 46 and nuts 50.

Generally "U" shaped spacers 102 having a throughbore 104 for receipt of stud shank are provided. The spacers 102 define a pair of leg members 106 and 108 which in turn define a pair of generally flat parallel outer surfaces 110 and 112 for surface contact with the sidewalls 34 and 36 of the axially extending slots.

Spacers 102 have an axial length 40 greater than the axial thickness 42 of flange portion 30 of the disc 12 whereby the disc 12 is isolated from the clamping forces exerted by nut 50 and/or flat washer 114.

A further alternate embodiment 150 of the present invention may be seen by reference to FIGURE 5. In FIGURE 5, flange portion 30 of disc 12 is mounted to a hub (not shown) by means of a stud 46 and a nut (not shown). A spiral spacer 152 is received within radially extending slot 32 which spacer will resiliently expand to tightly engage the side walls 34 and 36 of the slot or elongated opening 32. With the exception of the cross sectional shape of spacer 152, the mounting structure 150 is identical or substantially identical to structure 10 described above.

The spiral cross sectional shape of spacer 152 provides an axially more rigid member than a split spacer, such as spacer 30, if additional strength is required.

Although the preferred embodiments of the present invention have been illustrated and described in some detail, it will be obvious to those skilled in the art that various changes may be made in the details and arrangement of the parts without departing from the spirit and the scope of the invention as it is defined in the following claims.

0127932
82-BRK-189

WE CLAIM;

Claim 1. An improved mounting structure (10) for mounting a brake disc (12) to a hub member (14) by threaded fastener means for rotation therewith and a degree of axial and radial movement relative thereto of the type wherein said hub member defines a first generally flat surface (28) having a plurality of axially extending internally threaded bores (26) therein, said disc defines a radially inwardly extending flange (30) defining a second flat surface matable with said first flat surface and having a plurality of radially elongated openings (32) therethrough alignable with said internally threaded bores, and comprising a plurality of threaded fastener means (46) each having one end received in each of said bores and passing through said elongated openings, the other end of said fastener means defining a rotatable bearing member effective (50) to be moved axially toward and away from said first flat surface by rotation thereof relative to said hub member, the improvement characterized by;

a spacer (38) surrounding said fastener member and having an axial length (40) greater than the axial thickness (42) of said flange, one end of said spacer member bearing against said first flat surface and the other end of said spacer member engageable by said rotatable bearing member whereby the axial forces applied by said rotatable bearing member will bear solely against said spacer.

Claim 2. The improved mounting structure of claim 1 wherein said spacer is generally tubular.

0127932

-13-

Claim 3. The improved mounting structure of Claim 2 wherein said structure additionally comprises resilient biasing means (52) having an inner portion interposed said bearing member and said other end of said spacer and an outer portion engagable with said flange, said washer configured to apply a relatively light resilient axial bias on said flange towards said first flat surface when said inner portion thereof is solidly compressed between said bearing member and said other end of said spacer.

Claim 4. The improved mounting structure of claim 3 wherein said resilient biasing means comprises an annular thrust washer.

Claim 5. The improved mounting structure of Claim 3 wherein said threaded fastening means comprises a stud (46) defining external thread on each end thereof and a nut (50), one end of said stud threadably received in one of said internally threaded bores and said nut threadably received on the other end of said stud, said nut defining the rotatable bearing member.

Claim 6. The improved mounting structure of claim 3 wherein said threaded fastener means comprises a headed bolt, the head of said bolt defining said rotatable bearing means and the end of said bolt shank opposite said head threadably received in one of said internally threaded bores.

Claim 7. The improved mounting structure of claim 2 wherein said spacer is a split, tubular member, said spacer in the nondeformed condition thereof having an outer diameter equal to or greater than the circumferential width of said radially elongated openings.

0127932

Claim 8. The improved mounting structure of claim 3 wherein said spacer is a split, tubular member, said spacer in he nondeformed condition thereof having an outer diamter equal to or greater than the circumferential width (44) of said radially elongated openings.

Claim 9. The improved mounting structure of claim 7 wherein said radially elongated openings are open at the radially inward edge of said disc flange to defined slots.

Claim 10. The improved mounting structure of claim 4 wherein said thrust washer means comprise a Belleville washer.

Claim 11. The improved mounting structure of claim 1 wherein said spacer (152) is of a generally spiral cross section.

Claim 12. The improved mounting structures of claim 11 wherein said structure additionally comprises thrust washer means having an inner portion interposed between said bearing member and said other end of said spacer and an outer portion engagable with said flange, said washer configured to apply a relatively light resilient axial bias on said flange towards said first flat surface when said inner portion thereof is solidly compressed between said bearing member and said other end of said spacer.

Claim 13. The improved mounting structure of claim 1 wherein said spacer (102) is generally "U" shaped, the leg portions of said "U" shape defining a pair of opposed generally flat parallel surfaces for surface contact with the radially extending walls of said elongated openings.

Claim 14. The improved mounting structure of claim 13 wherein said structure additionally comprises a resilient biasing means interposed said bearing member and said flange.

Fig. 1

Fig. 2

0127932

1/2

*Fig. 3*

*Fig. 4*

*Fig. 5*

# European Patent Office

## EUROPEAN SEARCH REPORT

EP 84 30 2284

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-1 775 685 (TEVES) <br> * Page 4, line 28 - page 5, line 6; figure 3 * | 1,2 | F 16 D 65/12 |
| D,A | US-A-4 102 443 (KOHLER et al.) <br><br> * Figure 3 * | 1,3,4 10 | |
| D,A | US-A-3 978 945 (GARDNER et al.) | | |

TECHNICAL FIELDS SEARCHED (Int. Cl. ³)

F 16 D 65/00

The present search report has been drawn up for all claims

| Place of search | Date of completion of the search | Examiner |
|---|---|---|
| BERLIN | 29-06-1984 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document